# EUROPÄISCHE PATENTSCHRIFT

(11) **EP 3 914 634 B1**
(45) Veröffentlichungstag und Bekanntmachung des Hinweises auf die Patenterteilung: **30.08.2023**
(21) Anmeldenummer: 20701439.0
(22) Anmeldetag: 20.01.2020
(51) Int. Cl.: C08G 65/26

(54) **WASSERBASIERTE PIGMENTPRÄPARATIONEN, IHRE HERSTELLUNG UND VERWENDUNG**
WATER-BASED PIGMENT PREPARATIONS, THE PRODUCTION THEREOF AND THE USE OF THE SAME
PRÉPARATIONS PIGMENTAIRES À BASE D'EAU, LEUR PRODUCTION ET LEUR UTILISATION

(30) Priorität: 23.01.2019 DE 102019200789
(43) Veröffentlichungstag der Anmeldung: 01.12.2021
(73) Patentinhaber: Clariant International Ltd, 4132 Muttenz (CH)
(72) Erfinder: SCHEINHARDT, Benjamin, 60529 Frankfurt (DE); BECK, Dietmar, 65929 Frankfurt am Main (DE); GABEL, Dorothee, 65207 Wiesbaden (DE); HÖVELMANN, Felix, 84453 Mühldorf (DE); KUPFER, Rainer, 65795 Hattersheim (DE)
(74) Vertreter: Mikulecky, Klaus
(86) Internationale Anmeldenummer: PCT/EP2020/051262
(87) Internationale Veröffentlichungsnummer: WO 2020/152093

(56) Entgegenhaltungen:
- DE-A1-102006 002 800

## Beschreibung

Gegenstand der vorliegenden Erfindung sind wasserbasierende Pigmentpräparationen bzw. -dispersionen, Verfahren zu ihrer Herstellung sowie ihre Verwendung zum Einfärben von natürlichen und synthetischen Materialien aller Art, insbesondere von Beschichtungsstoffen, Anstrichmitteln, Lacken, Farben, Lasuren, Firnissen, Holzschutzsystemen, Isolierstoffen, wie beispielsweise Glaswolle, Tinten für Schreibutensilien, wie beispielsweise Buntstiftminen, Faserschreiber, Fineliner, Filzstifte, Gelroller, Text- oder Whiteboardmarker, und Tintenstrahl- bzw. Ink-Jet-Verfahren sowie elektrofotografischen Tonern und Entwicklern, beispielsweise Ein- oder Zweikomponentenpulvertoner, Magnettoner, Flüssigtoner, Latextoner, Polymerisationstoner sowie Spezialtoner.

Wässrige Pigmentpräparationen sind flüssige Stoffgemenge, in denen das Pigment in wässrigem Medium feinverteilt vorliegt und die als Farbmittel zur Einfärbung unterschiedlichster Systeme eingesetzt werden.

Für viele Anwendungen werden Pigmentpräparationen mit möglichst kleinen Partikelgrößen und einer möglichst geringen Partikelgrößenverteilungsbreite gefordert. Dies gilt beispielsweise für die Anwendung in Lacken, Lasuren und Firnissen, etwa für die Holzbeschichtung, wo oft eine hohe Transparenz gefordert ist. Für die Anwendung in Tinten für Schreibutensilien, wie beispielsweise Fineliner, Filzstifte, Gelroller, Text- oder Whiteboardmarker, für Tintenstrahl- bzw. Ink-Jet-Verfahren sowie Tonern für elektrofotografische Druckverfahren, ist eine hohe Partikelfeinheit essentiell, um beispielsweise ein Verstopfen der Düsen oder Schreibspitzen zu vermeiden.

Neben Pigmentpräparationen werden in diesen Anwendungsbereichen klassischerweise auch Farbstoffe eingesetzt. Allerdings besitzen viele Pigmente gegenüber konventionellen Farbstoffen neben toxikologischen und ökotoxikologischen Vorteilen auch technische Vorzüge, wie etwa eine bessere Licht-, Wetter- und Ausblutechtheit, die mit Farbstoffen nur sehr schwer oder nicht zu erreichen sind. In vielen Bereichen ist daher der Einsatz von Pigmentpräparationen anstelle von Farbstoffen erwünscht. Die anwendungstechnischen und koloristischen Eigenschaften von Farbstoffen, wie beispielsweise eine hohe Transparenz, Farbstärke, Reinheit und Brillanz, sind mit Pigmenten dagegen nur schwer zu erzielen und erfordern im Allgemeinen einen möglichst hohen Dispergiergrad, d.h. möglichst geringe Partikelgrößen. Für die vorstehend genannten Anwendungen müssen die Partikelgrößen typischerweise kleiner als 1 µm sein, wobei vorzugsweise 95% der Partikel kleiner als 500 nm sein müssen. Für den Einsatz von Pigmentpräparationen anstelle von Farbstoffen wird aufgrund der vergleichsweise hohen Farbstärke von Farbstoffen zudem ein möglichst hoher Pigmentgehalt in den Pigmentpräparationen benötigt.

Zur Pigmentdispergierung werden üblicherweise oberflächenaktive Substanzen, wie Netz- und Dispergierhilfsmittel, eingesetzt, welche die Pigmentpartikel in ihrer feinteiligen Form im kontinuierlichen Medium physikalisch stabilisieren und die Eigenschaften einer Pigmentpräparation maßgeblich beeinflussen. Die Erreichung und Stabilisierung von Pigmentpartikeln in dem vorstehend genannten Größenbereich erfordert Dispergierhilfsmittel mit einer sehr hohen Dispergierleistung. Auch die gleichzeitige Erreichung von Partikelgrößen kleiner als 500 nm und einem Rheologieprofil, das den Anforderungen der vorstehend beschriebenen Anwendungen auch nach Lagerung genügt, insbesondere einer Viskosität von kleiner als 1,0 Pa*s, bei möglichst hohem Pigmentgehalt stellt eine große Herausforderung an die eingesetzten Dispergierhilfsmittel dar.

Eine einfache und effiziente Einarbeitung der Pigmentpräparation in das einzufärbende System ohne Flokkulation oder Reagglomeration der Pigmentpartikel ist essentiell. Die Kompatibilität mit dem Anwendungsmedium wird dabei maßgeblich über die eingesetzten Dispergierhilfsmittel beeinflusst. Für die vorstehend beschriebenen Anwendungen wird eine Verträglichkeit der wässrigen Pigmentpräparation mit verschiedenen organischen Lösungsmitteln, insbesondere mit Alkoholen verschiedener Kettenlängen, vorzugsweise Ethanol, gefordert, d.h. Kristallwachstum oder -phasenübergänge und eine Agglomeration oder Flokkulation der Partikel muss wirksam verhindert werden. Gemäß der bekannten Partikelstabilisierungsmechanismen müssen die eingesetzten Dispergierhilfsmittel daher eine gute sterische Stabilisierung der dispergierten Partikel in diesen Anwendungsmedien bewirken.

Für die vorstehend beschriebenen Anwendungen muss die Pigmentpräparation auch unter Scherung, erhöhter Temperatur sowie Druckvariationen stabil sein, beispielsweise für die Anwendung in Tinten für Tintenstrahl- bzw. Ink-Jet-Verfahren, welche beim Verdrucken mit hoher Geschwindigkeit durch die Düsen fließen, in Lacken, beispielsweise für Sprühapplikationen, oder beim Entgasen/Entlüften.

Darüber hinaus dürfen wässrige Pigmentpräparationen bzw. deren Formulierungskomponenten nicht anderweitig negativ untereinander oder mit dem Anwendungsmedium interagieren, beispielsweise dürfen sie keinen unerwünschten Abbau der eingesetzten Biozide bewirken. Dies gilt insbesondere auch für in den Formulierungskomponenten enthaltene Nebenprodukte und/oder nicht umgesetzte Edukte.

Die Bereitstellung von wässrigen Pigmentpräparationen für die vorstehend genannten Anwendungen, welche neben den hohen technischen Anforderungen, insbesondere hinsichtlich Partikelgrößenverteilung, Kompatibilität und Mischbarkeit mit dem jeweiligen Anwendungsmedium, koloristischen Eigenschaften, Pigmentgehalt, Rheologieprofil, Stabilität sowie Schaumneigung, auch den regulatorischen Anforderungen, beispielsweise hinsichtlich dem toxikologischen und ökotoxikologischen Profil, genügt, ist eine zunehmende Herausforderung an die Industrie.

Die Ursache hierfür ist insbesondere, dass fortlaufende Verschärfungen in der chemikalienrechtlichen Gesetzgebung sowie bei der Vergabe von Umweltzeichen, beispielsweise des Blauen Engels oder des Europäischen Umweltzeichens, dafür sorgen, dass vermehrt übliche Formulierungskomponenten für Pigmentpräparationen für manche Anwendungsgebiete nicht mehr oder nur noch in begrenztem Maße einsetzbar sind. Dies betrifft insbesondere auch die Netz- und Dispergiermittel. Beispielsweise sind Alkylphenolethoxylate (APEOs) aufgrund der bioakkumulativen und hormonell wirkenden Abbauprodukte heute streng reguliert und für viele Anwendungen verboten. Der Einsatz von Tristyrylphenolethoxylaten (TSPEOs) ist zwar nach wie vor möglich, allerdings gibt es in der Industrie aufgrund des nachteiligen ökotoxikologischen Profils einen starken Trend auf diese Rohstoffe zu verzichten. Der Einsatz von in der Vergangenheit verwendeten Novolak- oder Bisphenol A-basierten Dispergiermitteln wird aus den gleichen Gründen sukzessive begrenzt. Auch die Verwendung von oxalkylierten Umsetzungsprodukten auf Basis primärer und sekundärer Amine als Dispergiermittel ist für manche Anwendungen aus regulatorischen sowie anwendungstechnischen Gründen kritisch und damit nur begrenzt möglich.

Im Stand der Technik sind wässrige Pigmentpräparationen auf Basis unterschiedlicher polymerer Dispergierhilfsmittel beschrieben.

EP 1 078 946 offenbart wässrige Pigmentpasten auf Basis von blockcopolymeren, styrenoxidhaltigen Polyalkylenoxiden als Pigmentnetzmittel.

EP 1 805 270 beschreibt wasserbasierende Pigmentpräparationen auf Oligoesterbasis.

DE 10 2006 002 800 offenbart wässrige Pigmentpräparationen auf Basis von Copolymeren aus Styroloxid, Alkylenoxiden und zwei oder mehrwertigen Aminen sowie Alkoholen. Die hier beschriebenen Pigmentpräparationen weisen jedoch nicht das benötigte Eigenschaftsprofil, wie z.B. niedrige Partikelgrößen im Nanobereich oder hohe Transparenz, für die vorstehend genannten Anwendungen auf. Auch die notwendige Kompatibilität der Pigmentpräparationen mit organischen Lösungsmitteln, wie beispielsweise Alkoholen, ist hier nicht erkannt worden. Aufgrund regulatorischer sowie anwendungstechnischer Anforderungen ist zudem der Einsatz von Dispergiermitteln auf Basis von Aminen in den vorstehend genannten Anwendungen oft nicht gewünscht, was die in DE 10 2006 002 800 beschriebenen Pigmentpräparationen stark begrenzt. Die offenbarten Viskositäten der Pigmentpräparationen liegen zwar in dem gewünschten Bereich von <1 Pa*s, allerdings sind die dort beschriebenen Pigmentgehalte und die damit verbundenen Farbstärken der Pigmentpräparationen vergleichsweise gering und die Rheologie sowie die Lagerstabilität der Pigmentpräparationen bei den für die oben genannten Anwendungen benötigten Pigmentgehalten ist nicht beschrieben.

EP 2 147 066 beschreibt wässrige Pigmentpräparationen auf Basis nichtionischer Copolymere, die mit Hilfe von Makromonomeren aus Polyethylen/Polypropylenglykol-Mono(meth)acrylsäureestern hergestellt werden.

Die im Stand der Technik beschriebenen wässrigen Pigmentpräparationen weisen oft zu große Partikelgrößen und Partikelgrößenverteilungsbreiten auf, so dass diese nicht für die vorstehend beschriebenen Anwendungen einsetzbar sind. Ferner ist deren Rheologieprofil sowie Lagerstabilität bei den geforderten Pigmentgehalten oft nicht ausreichend. Zudem sind deren Farbstärke sowie Kompatibilität mit den Anwendungssystemen noch stark verbesserungsbedürftig.

Wässrige Pigmentpräparationen, welche alle Bedingungen für die vorstehend beschriebenen Anwendungen erfüllen, ohne Nachteile in Kauf nehmen zu müssen, sind bislang nicht beschrieben.

Der vorliegenden Erfindung lag die Aufgabe zugrunde, wässrige Pigmentpräparationen bereitzustellen, die zu 95% Partikelgrößen vorzugsweise kleiner als 500 nm aufweisen. Diese sollten ferner frei von Alkylphenol-, Tristyrylphenol-, Novolak- und Bisphenol A-Derivaten sowie von primären und sekundären Aminen sein und sich gut mit Alkoholen verschiedener Kettenlängen ohne Koagulation oder Flokkulation verdünnen lassen. Weiterhin sollten die Präparationen über eine möglichst hohe Transparenz und Farbstärke verfügen und eine möglichst geringe Schaumneigung aufweisen. Die wässrigen Präparationen sollten lagerstabil sein, d.h. die vorstehend beschriebenen Eigenschaften sollten auch bei Lagerung über einen längeren Zeitraum stabil erhalten bleiben. Ferner müssen die Präparationen scherstabil sein, d.h. die Koloristik oder Farbstärke darf sich unter Scherung nicht signifikant ändern.

Diese Aufgabe konnte überraschenderweise dadurch gelöst werden, dass das Pigment mit speziellen, nachstehend definierten Copolymeren aus drei- oder höherwertigen Polyolen, Styroloxid und Alkylenoxiden dispergiert wird. Durch die mindestens dreiwertigen Startermoleküle haben diese Polymere verzweigte stern- oder dendrimerartige Strukturen mit einem eher hydrophoben Kern und einer eher hydrophilen Peripherie. Bei der Verwendung anderer Copolymere basierend auf anderen Startermolekülen und mit anderer als der genannten Zusammensetzungen oder Reihenfolgen der Blöcke erhält man wässrige Pigmentpräparationen, die nicht das gesamte vorstehend genannte Eigenschaftsprofil aufweisen, insbesondere hinsichtlich der angestrebten Partikelgrößenverteilung, koloristischen Eigenschaften, Kompatibilität, Viskosität sowie Stabilität.

Gegenstand der Erfindung sind daher wässrige Pigmentpräparationen, enthaltend
(A) mindestens ein organisches und/oder anorganisches Pigment und/oder Füllstoff
(B) mindestens ein Dispergiermittel der Formel (I) oder (II), oder Mischungen der Dispergiermittel der Formeln (I) und (II), 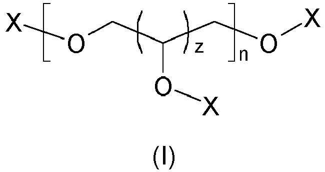 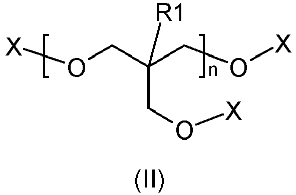 wobei
   - n: eine ganze Zahl größer oder gleich 1, bevorzugt 1 bis 5, besonders bevorzugt 1 bis 2,
   - z: eine ganze Zahl größer oder gleich 1, bevorzugt 1 bis 10, besonders bevorzugt 1 bis 4,
   - R1: ein aliphatischer, linearer oder verzweigter Kohlenwasserstoffrest mit 1 bis 10 Kohlenstoffatomen oder ein Wasserstoffatom oder die Struktureinheit -O-X oder die Struktureinheit -CH₂-O-X ist,
   und Struktureinheit X der Formel (III) entspricht 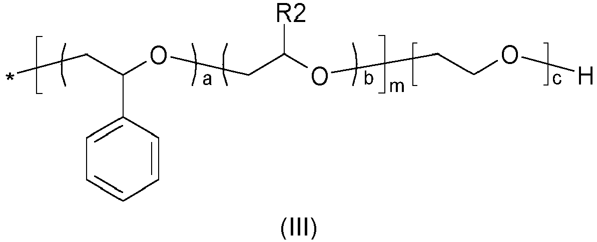 worin
   - a: eine ganze Zahl von 1 bis 10,
   - b: eine ganze Zahl von 0 bis 10
   - c: eine ganze Zahl von 1 bis 50,
   - m: 1 oder 2; und
   - R2: ein aliphatischer, linearer oder verzweigter Kohlenwasserstoffrest mit 1 bis 10 Kohlenstoffatomen ist,
   wobei 99% der Partikel der Komponente (A) eine Partikelgröße kleiner als 500 nm aufweisen.

Ferner kann die erfindungsgemäße Pigmentpräparation noch folgende weitere Additive enthalten:
(C) gegebenenfalls Netzmittel,
(D) gegebenenfalls weitere Tenside und/oder Dispergiermittel,
(E) gegebenenfalls ein oder mehrere organische Lösemittel und/oder eine oder mehrere hydrotrope Substanzen und/oder Mischungen daraus,
(F) gegebenenfalls weitere zur Herstellung wässriger Pigmentdispersionen übliche Zusatzstoffe, und
(G) Wasser.

Bevorzugte Pigmentpräparationen enthalten 5 bis 80 Gew.-%, vorzugsweise 10 bis 70 Gew.-%, insbesondere bevorzugt 30 bis 70 Gew % an Komponente (A). Bevorzugte Pigmentpräparationen enthalten 0,1 bis 30 Gew.-%, vorzugsweise 2 bis 20 Gew.-%, insbesondere bevorzugt 5 bis 15 Gew% an Komponente (B).

Besonders bevorzugte Pigmentpräparationen enthalten an Komponente
(A) 5 bis 80 Gew.-%, insbesondere 10 bis 70 Gew.-%,
(B) 0,1 bis 30 Gew.-%, insbesondere 2 bis 20 Gew.-%,
(C) 0 bis 10 Gew.-%, insbesondere 0,1 bis 5 Gew.-%,
(D) 0 bis 20 Gew.-%, insbesondere 1 bis 10 Gew.-%,
(E) 0 bis 30 Gew.-%, insbesondere 5 bis 20 Gew.-%,
(F) 0 bis 20 Gew.-%, insbesondere 0,1 bis 5 Gew.-%,
(G) Rest Wasser,
jeweils bezogen auf das Gesamtgewicht (100 Gew.-%) der Pigmentpräparation.

Im Falle, dass die erfindungsgemäße Pigmentpräparation eine oder mehrere der Komponenten (C), (D), (E) und (F) enthält, beträgt deren Minimalkonzentration unabhängig voneinander vorzugsweiseweise mindestens 0,01 Gew.-%, insbesondere mindestens 0,1 Gew.-%, bezogen auf das Gesamtgewicht der Pigmentpräparation.

Die Komponente (A) der erfindungsgemäßen Pigmentpräparation ist ein feinteiliges organisches oder anorganisches Pigment oder ein Füllstoff oder ein Gemisch verschiedener organischer und/oder anorganischer Pigmente und/oder Füllstoffe. Die Komponente (A) kann auch ein Farbstoff sein, der in bestimmten Lösemitteln löslich ist und in anderen Lösemitteln Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen.

Ferner eignen sich verlackte Farbstoffe wie Ca-, Mg-, Al-Lacke von sulfonsäure- und/oder carbonsäuregruppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Geeignete Füllstoffe sind beispielsweise feinteilige Erze, Mineralien und schwer- oder unlösliche Salze, wie z.B. Carbonate, Calciumcarbonat, Dolomit, Siliciumdioxid, Quarz, Cristobalit, Kieselgur, Silikate, Aluminiumsilikate, Kieselsäuren, Talkum, Kaolin, Glimmer, Feldspat, sowie Bariumsulfat. Bevorzugt werden auch häufig Mischungen von Füllstoffen verwendet. Mischungen von organischen und/oder anorganischen Pigmenten mit Füllstoffen werden ebenfalls häufig verwendet. Formulierungen, welche ausschließlich einen oder mehrere Füllstoffe enthalten, dienen beispielsweise der Abmischung von Pigmentpräparationen zur Einstellung des gewünschten Eigenschaftsprofils, wie etwa des Pigmentgehaltes, der Rheologie, Dichte oder Kompatibilität.

Bei den Struktureinheiten (I) und (II) der Komponente (B) handelt es sich um Umsetzungsprodukte aus alkoxylierbaren drei- oder höherwertigen Polyolen, vorzugsweise Diglycerin, Erythrit, Glycerin, Pentaerythrit, Polyglycerine, Sorbit, Trimethylolpropan oder Xylitol, besonders bevorzugt Glycerin und Pentaerythrit.

In Formel (III) zeigt der Stern die Bindungsposition dieses Restes an das restliche Molekül (Formel I oder II) an. Beginnend von dieser Bindung ist es erforderlich, dass die Struktureinheit mit dem stöchiometrischen Index m immer vor der Struktureinheit mit dem stöchiometrischen Index c steht, d.h. dass der Polyol-Starter immer zuerst mit Styroloxid und/oder einem Alkylenoxid außer Ethylenoxid umgesetzt wird, bevor Ethylenoxid anpolymerisiert wird. Die Blöcke mit den stöchiometrischen Indices a und b innerhalb der Klammer mit dem stöchiometrischen Index m können dahingegen statistisch oder blockweise angeordnet sein.

Als Komponente (C) werden beispielsweise kationische, anionische, amphotere oder nicht ionogene Verbindungen verwendet, die die Pigmentbenetzung fördern (Netzmittel, Benetzter).

Als Komponente (D) der erfindungsgemäßen Pigmentpräparationen dienen übliche, zur Herstellung wässriger Pigmentdispersionen geeignete Dispergiermittel und Tenside oder Gemische solcher Substanzen. Üblicherweise werden hierfür anionische, kationische, amphotere oder nichtionische grenzflächenaktive Verbindungen verwendet. Besonders bewährt haben sich darunter Dispergiermittel, die eine oder mehrere mittel- oder langkettige Kohlenwasserstoffketten besitzen, zum Teil auch solche, die über aromatische Ringgruppen verfügen. Von der Vielzahl der Verbindungen soll an dieser Stelle nur eine Auswahl angeführt werden, ohne jedoch die Anwendbarkeit der erfindungsgemäßen Präparationen auf diese Beispiele einzuschränken. Beispiele sind Alkylsulfate wie z.B. Laurylsulfat, Stearylsulfat oder Octadecylsulfat, primäre Alkylsulfonate wie z.B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso alle Salze dieser Verbindungen. Ferner eignet sich Sojalecithin oder es werden Kondensationsprodukte aus Fettsäure und Taurin oder Hydroxyethansulfonsäure verwendet, ebenso Alkoxylierungsprodukte von Rizinusölkolophoniumestern, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosporsäureester, sowie deren Salze, den Sulfonaten, Sulfaten oder Phosphaten. Auch sind nichtionische oder anionisch modifizierte Copolymere geeignet, die mit Hilfe von Makromonomeren aus Polyethylen/Polypropylen-glykol-Mono(meth)acrylsäureestern hergestellt werden, in ähnlicher Weise auch nichtionische oder anionisch modifizierte blockcopolymere, styrenoxidhaltige Polyalkylenoxide.

Der Komponente (E) entsprechen organische Lösemittel oder hydrotrope Substanzen. Dabei kann es sich beispielsweise um folgende Verbindungen oder um ein Gemisch davon handeln: Ein- oder mehrwertige Alkohole, deren Ether und Ester, z.B. Alkanole, insbesondere mit 1 bis 4 C-Atomen, wie beispielsweise Methanol, Ethanol, Propanol, Isopropanol, Butanol, Isobutanol; zwei- oder dreiwertige Alkohole, insbesondere mit 2 bis 5 C-Atomen, z.B. Ethylenglycol, Propylenglycol, 1,3-Propandiol, 1,4-Butandiol, 1,5-Pentandiol, 1,6-Hexandiol, 1,2,6-Hexantriol, Glycerin, Diethylenglycol, Dipropylenglycol, Triethylenglycol, Polyethylenglycol, Tripropylenglycol, Polypropylenglycol; niedere Alkylether von mehrwertigen Alkoholen, wie z.B. Ethylenglycolmono-methyl-, -ethyl- oder -butylether, Triethylenglycolmono-methyl- oder -ethyl-ether; Ketone und Ketonalkohole, wie z.B. Aceton, Methylethylketon, Diethylketon, Methylisobutylketon, Methylpentylketon, Cyclopentanon, Cyclohexanon, Diacetonalkohol; Copolymere aus Ethylen- und Propylenglycol.

Als Komponente (F) werden beispielsweise Verdicker, Konservierungsmittel, Viskositätsstabilisatoren und Mahlhilfsmittel eingesetzt. Weitere übliche Zusatzstoffe können Antiabsetzmittel, Lichtschutzmittel, Antioxidantien, Entschäumer/Entgaser/Entlüfter, schaumreduzierende Mittel, Antibackmittel sowie Additive sein, welche die Viskosität und Rheologie günstig beeinflussen. Als Mittel zur Regulierung der Viskosität kommen z.B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak. Der Komponente (F) können auch Fette und Öle pflanzlicher und tierischer Herkunft entsprechen, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z.B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der Pigmentpräparationen benutztes Wasser, Komponente (G), wird vorzugsweise in Form von destilliertem oder entsalztem Wasser eingesetzt. Auch Trinkwasser (Leitungswasser) und/oder Wasser natürlichen Ursprungs kann verwendet werden.

Die Pigmentpräparationen sind dadurch gekennzeichnet, dass 99 % der Pigmentpartikel eine Teilchengröße von kleiner als 500 nm besitzen. Die mittlere Teilchengröße liegt bei kleiner als 200 nm und bevorzugt bei kleiner als 150 nm.

Die Pigmentpräparationen verfügen über eine hohe Transparenz und Farbstärke und weisen eine geringe Schaumneigung auf. Sie besitzen eine Viskosität von kleiner als 1,0 Pa*s, vorzugsweise kleiner als 0,7 Pa*s und besonders bevorzugt kleiner als 0,5 Pa*s. Die Pigmentpräparationen sind mit Alkoholen verschiedener Kettenlängen, vorzugsweise Ethanol, in beliebigen Verhältnissen ohne Koagulation oder Flokkulation der Pigmentpartikel mischbar. Die Pigmentpräparationen besitzen eine gute Lagerbeständigkeit und eine gute Scherstabilität.

Ferner sind die erfindungsgemäßen Pigmentpräparationen frei von Alkylphenol-, Tristyrylphenol-, Novolak- und Bisphenol A-Derivaten sowie von primären und sekundären Aminen.

Gegenstand der vorliegenden Erfindung ist auch ein Verfahren gemäß Anspruch zur Herstellung solcher Pigmentpräparationen, dadurch gekennzeichnet, dass man die Komponente (A) in Form von Pulver, Granulat oder wässrigem Presskuchen in Gegenwart von Wasser (G) sowie den Komponenten (B) und gegebenenfalls (C), (D), (E) und (F) dispergiert, anschließend gegebenenfalls Wasser (G), sowie gegebenenfalls eine oder mehrere der Komponenten (C), (D), (E) und (F) zumischt und gegebenenfalls die erhaltende wässrige Pigmentdispersion mit Wasser (G) verdünnt.

Das Pigment und die Dispergierhilfsmittel der Formel (I) oder (II) oder Mischungen der Dispergiermittel der Formeln (I) und (II) werden hierbei mit Hilfe eines Dispergieraggregates oder Kombinationen aus verschiedenen Dispergieraggregaten, vorzugsweise einer Rührwerkskugelmühle, die mit einer Rührwerksumfangsgeschwindigkeit von über 10 m/s betrieben wird und unter Einwirkung von nichtmetallischen Mahlkörpern vom Durchmesser kleiner oder gleich 1,2 mm, bevorzugt kleiner oder gleich 0,8 mm, in Gegenwart von Wasser feindispergiert oder feinverteilt. Die übrigen Zusatzstoffe können bei der Feinverteilung zugegen sein und/oder anschließend zugegeben werden.

Gegenstand der Erfindung ist auch die Verwendung der erfindungsgemäßen Pigmentpräparationen als Farbmittel zum Pigmentieren und Färben von natürlichen und synthetischen Materialien aller Art, insbesondere von wässrigen Beschichtungsstoffen, Anstrichmitteln, Dispersions- und Lackfarben (Dispersionslacken), wasserverdünnbaren Lacken, Lasuren, Firnissen und Holzschutzsystemen, Druckfarben, hierbei beispielsweise Textildruck-, Flexodruck-, Dekordruck- oder Tiefdruckfarben, elektrofotografische Toner und Entwickler, wie beispielsweise Ein- oder Zweikomponentenpulvertoner (auch Ein- oder Zweikomponenten- Entwickler genannt), Magnettoner, Flüssigtoner, Latextoner, Polymerisationstoner sowie Spezialtoner, Tinten, vorzugsweise Ink-Jet-Tinten, z.B. auf wässriger oder nichtwässriger Basis ("Solvent Based"), Mikroemulsionstinten, UV-härtbare Tinten sowie in solchen Tinten, die nach dem Hot-Melt-Verfahren funktionieren, Tinten für Schreibutensilien, wie beispielsweise Buntstiftminen, Faserschreiber, Fineliner, Filzstifte, Gelroller, Text- oder Whiteboardmarker, sowie Isolierstoffen, wie beispielsweise Glaswolle.

Ferner eignen sich die erfindungsgemäßen Pigmentpräparationen zur Einfärbung makromolekularer Materialien aller Art, z.B. von natürlichen und synthetischen Fasermaterialien. Weitere Anwendungen sind die Einfärbung von Wurstdärmen, Saatgut, Düngemitteln, Glas, insbesondere Glasflaschen, Putze, Beton, Holzbeizen, Wachsen, Paraffinen, Tuschen, Pasten für Kugelschreiber, Kreiden, Wasch- und Reinigungsmitteln, Schuhpflegemitteln, Latex-Produkten, Schleifmitteln, bei Viskose-Spinnfärbungen sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Außerdem können die erfindungsgemäßen Pigmentpräparationen auch als Farbmittel für Farbfilter ("Color Filter") für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper") eingesetzt werden.

### Beispiele

Beispiele der in den erfindungsgemäßen Pigmentpräparationen eingesetzten Dispergiermittel sind folgende Verbindungen, die durch Alkoxylierung der entsprechenden Polyole erhalten wurden.

| Muster | Zusammensetzung | Chemische Struktur |
|---|---|---|
| Muster 1 | Pentaerythrit + 4 Mol Propylenoxid + 12 Mol Styroloxid + 140 Mol Ethylenoxid | 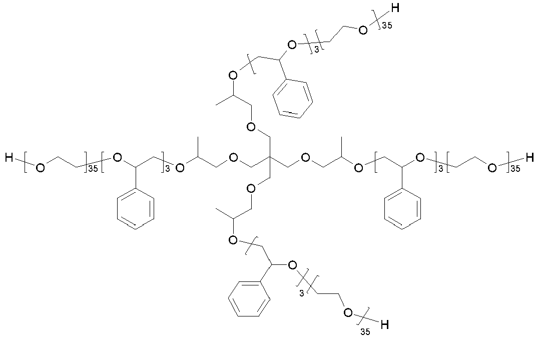 |
| Muster 2 | Pentaerythrit + 4 Mol Propylenoxid + 4 Mol Styroloxid + 40 Mol Ethylenoxid | 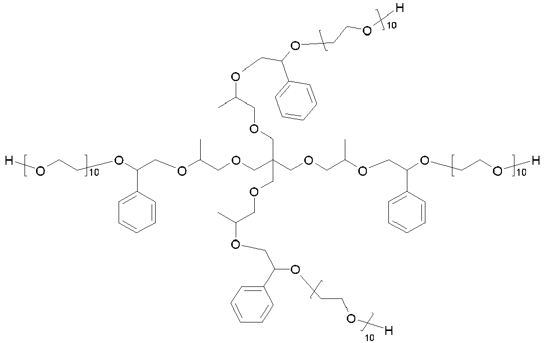 |
| Muster 3 | Glycerin + 12 Mol Styroloxid + 75 Mol Ethylenoxid | 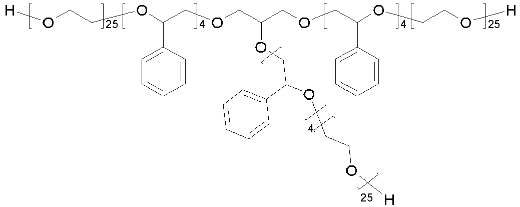 |
| Muster 4 | Glycerin + 6 Mol Styroloxid + 42 Mol Ethylenoxid | 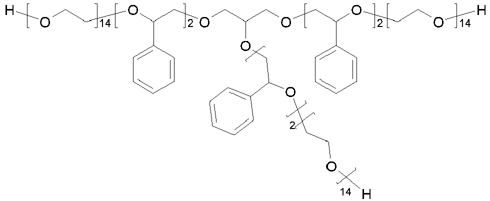 |
| Vergleichsmuster 1 | Ethylendiamin + 4 Mol Propylenoxid + 8 Mol Styroloxid + 80 Mol Ethylenoxid | 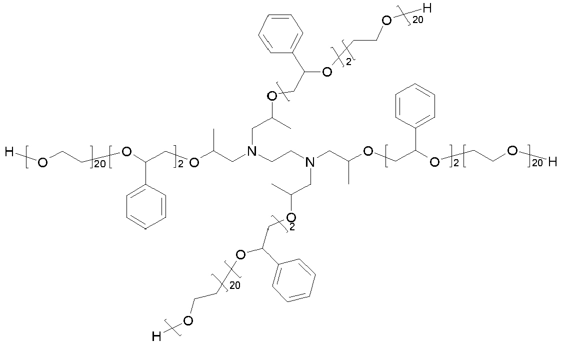 |

### Herstellung einer Pigmentpräparation:

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z.B. von der Firma VMAGetzmann GmbH, Type AE3-M1) oder einer anderen geeigneten Apparatur homogenisiert und vordispergiert. Die anschließende Feindispergierung erfolgte mit Hilfe einer Perlmühle (z.B. mit AE3-M1 von VMA-Getzmann GmbH) oder einem anderen geeigneten Dispergieraggregat, wobei die Mahlung mit Zirkonsilicat- oder Zirkonoxidperlen der Größe d = 0,4 - 0,6 mm unter Kühlung bis zur gewünschten Farbstärke, Koloristik, Transparenz und Partikelgrößenverteilung erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beurteilung einer Pigmentpräparation:

Die Bestimmung der Farbstärke und des Farbtons erfolgte nach DIN 55986. Für die Bestimmung der Kompatibilität mittels "Rub-Out-Test" wurde die Dispersionsfarbe oder der Lack nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche kräftiger gefärbt war, als die angrenzende, nicht nachbehandelte Fläche (der "Rub-Out-Test" wird in DE 2 638 946 beschrieben). Die Transparenz der Pigmentpräparationen wurde in einem wässrigen Acrylatfirnis durch Aufziehen auf eine Lackkarte mit schwarzem Kontrastbalken ermittelt.

Die Viskosität wurde mit einem Kegel-Platte-Viskosimeter (MCR 72) der Firma Anton Paar GmbH bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Ausgewertet wurde die Viskosität bei einem Schergefälle von 60 s⁻¹.

Partikelgrößenverteilungen wurden mittels Scheibenzentrifuge (CPS Disc Centrifuge DC24000 UHR) der Firma CPS Instruments ermittelt.

Zur Prüfung der Mischbarkeit mit Ethanol wurde die Pigmentpräparation mit Wasser auf 1 Gew.-% verdünnt und anschließend wurde schrittweise in Stufen von 5% bis zu einer maximalen Zugabemenge von 50% Ethanol zugegeben. Zur Beurteilung der Stabilität wurde die Homogenität der Mischung nach 7 Tagen visuell bewertet.

Für eine Beurteilung der Lagerstabilität der Dispersionen wurde die Viskosität direkt nach der Herstellung der Präparation gemessen, sowie nach Lagerung für 28 Tage bei 50 °C. Zusätzlich wurde die Farbstärke der so gelagerten Probe gegen eine bei Raumtemperatur gelagerte Probe ermittelt. Zudem wurden die Homogenität sowie das Sedimentationsverhalten der gelagerten Probe durch Ermittlung des gebildeten Bodensatzes sowie Serums bewertet.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beispiel 1

| | | |
|---|---|---|
| 45,0 | Teile | Komponente (A), C.I. Pigment Red 112 |
| 7,0 | Teile | Komponente (B), Dispergiermittel entsprechend Muster 1 |
| 11,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <180 nm und 95% der Partikel sind kleiner als 350 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,34 Pa*s. Die Präparation ist scherstabil und schäumt nicht.

### Beispiel 2

| | | |
|---|---|---|
| 30,0 | Teile | Komponente (A), C.I. Pigment Violet 023 |
| 8,0 | Teile | Komponente (B), Dispergiermittel entsprechend Muster 1 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <100 nm und 95% der Partikel sind kleiner als 250 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,04 Pa*s. Die Präparation ist scherstabil und schäumt nicht.

### Beispiel 3

| | | |
|---|---|---|
| 45,0 | Teile | Komponente (A), C.I. Pigment Red 112 |
| 7,0 | Teile | Komponente (B), Dispergiermittel entsprechend Muster 2 |
| 11,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <180 nm und 95% der Partikel sind kleiner als 350 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,11 Pa*s. Die Präparation ist scherstabil und schäumt nicht.

### Beispiel 4

| | | |
|---|---|---|
| 45,0 | Teile | Komponente (A), C.I. Pigment Red 112 |
| 7,0 | Teile | Komponente (B), Dispergiermittel entsprechend Muster 3 |
| 11,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <180 nm und 95% der Partikel sind kleiner als 350 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,68 Pa*s. Die Präparation ist scherstabil und schäumt nicht.

### Beispiel 5

| | | |
|---|---|---|
| 40,0 | Teile | Komponente (A), C.I. Pigment Blue 015:3 |
| 8,0 | Teile | Komponente (B), Dispergiermittel entsprechend Muster 3 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <100 nm und 95% der Partikel sind kleiner als 180 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,19 Pa*s. Die Präparation ist scherstabil und schäumt nicht.

Die in DE 10 2006 002 800 beschriebenen Pigmentpräparationen auf Basis von C.I. Pigment Blue 015:3 weisen zwar eine Viskosität im gewünschten Bereich von <1 Pa*s auf, allerdings liegt deren Pigmentgehalt lediglich bei 30 Gew.-%. Im Gegensatz hierzu liegt der Pigmentgehalt im voranstehend gezeigten Beispiel 5 bei 40 Gew.-%, was einer Erhöhung des Pigmentgehaltes um >33 % bei gleichbleibend guter Lagerstabilität und Viskosität entspricht.

### Beispiel 6

| | | |
|---|---|---|
| 33,0 | Teile | Komponente (A), C.I. Pigment Black 007 |
| 13,0 | Teile | Komponente (B), Dispergiermittel entsprechend Muster 3 |
| 1,0 | Teile | Komponente (C), Netzmittel |
| 0,8 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <50 nm und 95% der Partikel sind kleiner als 100 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,25 Pa*s. Die Präparation ist scherstabil und schäumt nicht.

Die in DE 10 2006 002 800 beschriebene Pigmentpräparation auf Basis von C.I. Pigment Black 007 weist zwar eine Viskosität im gewünschten Bereich von <1 Pa*s auf, allerdings liegt deren Pigmentgehalt lediglich bei 25 Gew.-%. Im Gegensatz hierzu liegt der Pigmentgehalt im voranstehend gezeigten Beispiel 6 bei 33 Gew.-%, was einer Erhöhung des Pigmentgehaltes um 32 % bei gleichbleibend guter Lagerstabilität und Viskosität entspricht.

### Beispiel 7

| | | |
|---|---|---|
| 30,0 | Teile | Komponente (A), C.I. Pigment Violet 023 |
| 8,0 | Teile | Komponente (B), Dispergiermittel entsprechend Muster 3 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <100 nm und 95% der Partikel sind kleiner als 250 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,03 Pa*s. Die Präparation ist scherstabil und schäumt nicht.

### Beispiel 8

| | | |
|---|---|---|
| 45,0 | Teile | Komponente (A), C.I. Pigment Red 112 |
| 7,0 | Teile | Komponente (B), Dispergiermittel entsprechend Muster 4 |
| 11,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <180 nm und 95% der Partikel sind kleiner als 350 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,29 Pa*s. Die Präparation ist scherstabil und schäumt nicht.

### Beispiel 9

| | | |
|---|---|---|
| 40,0 | Teile | Komponente (A), C.I. Pigment Blue 015:3 |
| 8,0 | Teile | Komponente (B), Dispergiermittel entsprechend Muster 4 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <100 nm und 95% der Partikel sind kleiner als 180 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,28 Pa*s. Die Präparation ist scherstabil und schäumt nicht.

Die in DE 10 2006 002 800 beschriebenen Pigmentpräparationen auf Basis von C.I. Pigment Blue 015:3 weisen zwar eine Viskosität im gewünschten Bereich von <1 Pa*s auf, allerdings liegt deren Pigmentgehalt lediglich bei 30 Gew.-%. Im Gegensatz hierzu liegt der Pigmentgehalt im voranstehend gezeigten Beispiel 9 bei 40 Gew.-%, was einer Erhöhung des Pigmentgehaltes um >33 % bei gleichbleibend guter Lagerstabilität und Viskosität entspricht.

### Beispiel 10

| | | |
|---|---|---|
| 33,0 | Teile | Komponente (A), C.I. Pigment Black 007 |
| 13,0 | Teile | Komponente (B), Dispergiermittel entsprechend Muster 4 |
| 1,0 | Teile | Komponente (C), Netzmittel |
| 0,8 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <50 nm und 95% der Partikel sind kleiner als 100 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,05 Pa*s. Die Präparation ist scherstabil und schäumt nicht.

Die in DE 10 2006 002 800 beschriebene Pigmentpräparation auf Basis von C.I. Pigment Black 007 weist zwar eine Viskosität im gewünschten Bereich von <1 Pa*s auf, allerdings liegt deren Pigmentgehalt lediglich bei 25 Gew.-%. Im Gegensatz hierzu liegt der Pigmentgehalt im voranstehend gezeigten Beispiel 10 bei 33 Gew.-%, was einer Erhöhung des Pigmentgehaltes um 32 % bei gleichbleibend guter Lagerstabilität und Viskosität entspricht.

### Beispiel 11

| | | |
|---|---|---|
| 30,0 | Teile | Komponente (A), C.I. Pigment Violet 023 |
| 8,0 | Teile | Komponente (B), Dispergiermittel entsprechend Muster 4 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und Transparenz. Die mittlere Teilchengröße liegt bei <100 nm und 95% der Partikel sind kleiner als 250 nm. Der Rub-Out-Test zeigt in allen Fällen keine Unterschiede im Vergleich zur nachgeriebenen Fläche. Die Präparation ist mit Ethanol mischbar und erweist sich als gut fließfähig und lagerstabil. Die Viskosität nach Herstellung beträgt 0,03 Pa*s. Die Präparation ist scherstabil und schäumt nicht.

### Vergleichsbeispiel 1

| | | |
|---|---|---|
| 40,0 | Teile | Komponente (A), C.I. Pigment Blue 015:3 |
| 8,0 | Teile | Komponente (B), Dispergiermittel entsprechend Vergleichsmuster 1 |
| 10,0 | Teile | Komponente (E), Propylenglycol |
| 0,6 | Teile | Komponente (F), Konservierungsmittel |
| Rest | | Komponente (G), Wasser |

Die Pigmentpräparation ist nicht fließfähig sowie nicht lagerstabil, da sie nach <1 Tag Standzeit stichfest geworden ist. Dies kann auf eine unzureichende Pigmentbenetzung und Partikelstabilisierung durch das eingesetzte Dispergiermittel zurückgeführt werden.

### Vergleichsbeispiel 2

| | | |
|---|---|---|
| 33,0 | Teile | Komponente (A), C.I. Pigment Black 007 |
| 13,0 | Teile | Komponente (B), Dispergiermittel entsprechend Vergleichsmuster 1 |
| 1,0 | Teile | Komponente (C), Netzmittel |
| 0,8 | Teile | Komponente (F), Konservierungsmittel |
| Rest | | Komponente (G), Wasser |

Die Pigmentpräparation hat eine geringe Farbstärke und Transparenz. Verglichen mit Beispiel 6 liegt die Farbstärke lediglich bei 60 %. Der Rub-Out-Test zeigt eine Unverträglichkeit in der Weißdispersion, da die nachgeriebene Fläche eine höhere Farbstärke aufweist. Die Präparation ist nicht lagerstabil, da die Viskosität nach Lagerung für 28 Tage bei 50 °C von 0,03 Pa*s auf 2,5 Pa*s angestiegen ist.

### Vergleichsbeispiel 3

| | | |
|---|---|---|
| 30,0 | Teile | Komponente (A), C.I. Pigment Violet 023 |
| 8,0 | Teile | Komponente (B), Dispergiermittel entsprechend Vergleichsmuster 1 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine sehr geringe Farbstärke. Verglichen mit Beispiel 2 liegt die Farbstärke lediglich bei 90 %. Die Pigmentpräparation ist schlecht mischbar mit Ethanol, da während der Zugabe von Ethanol eine deutlich sichtbare Koagulation oder Flokkulation auftritt und sich das Pigment nach <1 Tag sichtbar absetzt.

| Beispiel | C.I. | Pigmentgehalt [Gew.-%] | Farbstärke | d50 [nm] | d95 [nm] | Kompatibilität | Mischbarkeit mit Ethanol | Viskosität [Pa*s] | Lagerstabilität |
|---|---|---|---|---|---|---|---|---|---|
| 1 | Pigment Red 112 | 45 | sehr gut | < 180 | < 350 | kein Rub-Out | sehr gut | 0,34 | sehr gut |
| 2 | Pigment Violet 023 | 30 | sehr gut | < 100 | < 250 | kein Rub-Out | sehr gut | 0,04 | sehr gut |
| 3 | Pigment Red 112 | 45 | sehr gut | < 180 | < 350 | kein Rub-Out | sehr gut | 0,11 | sehr gut |
| 4 | Pigment Red 112 | 45 | sehr gut | < 180 | < 350 | kein Rub-Out | sehr gut | 0,68 | sehr gut |
| 5 | Pigment Blue 015:3 | 40 | sehr gut | < 100 | < 180 | kein Rub-Out | sehr gut | 0,19 | sehr gut |
| 6 | Pigment Black 007 | 33 | sehr gut | < 50 | < 100 | kein Rub-Out | sehr gut | 0,25 | sehr gut |
| 7 | Pigment Violet 023 | 30 | sehr gut | < 100 | < 250 | kein Rub-Out | sehr gut | 0,03 | sehr gut |
| 8 | Pigment Red 112 | 45 | sehr gut | < 180 | < 350 | kein Rub-Out | sehr gut | 0,29 | sehr gut |
| 9 | Pigment Blue 015:3 | 40 | sehr gut | < 100 | < 180 | kein Rub-Out | sehr gut | 0,28 | sehr gut |
| 10 | Pigment black 007 | 33 | sehr gut | < 50 | < 100 | kein Rub-Out | sehr gut | 0,05 | sehr gut |
| 11 | Pigment Violet 023 | 30 | sehr gut | < 100 | < 250 | kein Rub-Out | sehr gut | 0,03 | sehr gut |
| Vergl. 1 | Pigment Blue 015:3 | 40 | n.b. | n.b. | n.b. | n.b. | n.b. | nicht messbar | schlecht, stichfest nach < 1 Tag |
| Vergl. 2 | Pigment Black 007 | 33 | 60 % vs. Bsp. 6 | n.b. | n.b. | starker Rub-Out | n.b. | 0,03 | schlecht, 2,5 Pa*s nach Lagerung |
| Vergl. 3 | Pigment Violet 023 | 30 | 90 % vs. Bsp. 2 | n.b. | n.b. | kein Rub-Out | schlecht | 0,04 | n.b. |

## Patentansprüche

1. Wässrige Pigmentpräparation, enthaltend
(A) mindestens ein organisches und/oder anorganisches Pigment und/oder Füllstoff
(B) mindestens ein Dispergiermittel der Formel (I) oder (II), oder Mischungen der Dispergiermittel der Formeln (I) und (II), 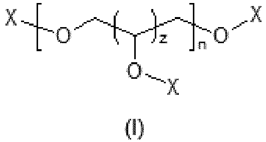 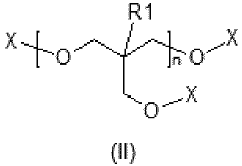 wobei
n eine ganze Zahl größer oder gleich 1,
z eine ganze Zahl größer oder gleich 1,
R1 ein aliphatischer, linearer oder verzweigter Kohlenwasserstoffrest mit 1 bis 10 Kohlenstoffatomen oder ein Wasserstoffatom oder die Struktureinheit -O-X oder die Struktureinheit -CH₂-O-X ist,
und Struktureinheit X der Formel (III) entspricht 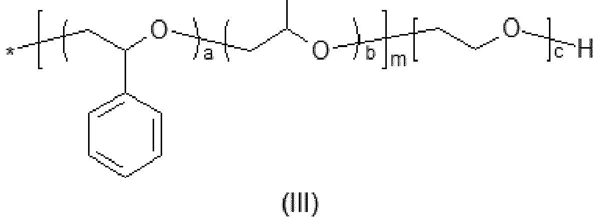 worin
a eine ganze Zahl von 1 bis 10,
b eine ganze Zahl von 0 bis 10
c eine ganze Zahl von 1 bis 50,
m 1 oder 2; und
R2 ein aliphatischer, linearer oder verzweigter Kohlenwasserstoffrest mit 1 bis 10 Kohlenstoffatomen ist
und wobei 99% der Partikel der Komponente (A) eine Partikelgröße < 500 nm aufweisen, wobei die Partikelgröße mittels dem im experimentellen Teil aufgeführten Verfahren bestimmt wird.

2. Zusammensetzung nach Anspruch 1, **dadurch gekennzeichnet, dass** diese weiterhin
(C) Netzmittel,
(D) und/oder weitere Tenside und/oder Dispergiermittel,
(E) und/oder ein oder mehrere organische Lösemittel und/oder eine oder mehrere hydrotrope Substanzen und/oder Mischungen daraus,
(F) und/oder weitere zur Herstellung wässriger Pigmentdispersionen übliche Zusatzstoffe, und
(G) gegebenenfalls Wasser enthält.

3. Pigmentpräparation nach Anspruch 1 und/oder 2, enthaltend 5 bis 80 Gew.-% der Komponente (A).

4. Pigmentpräparation nach mindestens einem der vorhergehenden Ansprüche, enthaltend 0,1 bis 30 Gew.-% der Komponente (B).

5. Pigmentpräparation nach mindestens einem der vorhergehenden Ansprüche, **gekennzeichnet durch** folgende Zusammensetzung der Komponenten (A) bis (G):
(A) 5 bis 80 Gew.-%,
(B) 0,1 bis 30 Gew.-%,
(C) 0 bis 10 Gew.-%,
(D) 0 bis 20 Gew.-%,
(E) 0 bis 30 Gew.-%,
(F) 0 bis 20 Gew.-%,
(G) Rest Wasser,
jeweils bezogen auf das Gesamtgewicht (100 Gew.-%) der Pigmentpräparation.

6. Pigmentpräparation nach mindestens einem der vorhergehenden Ansprüche, **gekennzeichnet durch** folgende Zusammensetzung der Komponenten (A) bis (G)
(A) 10 bis 70 Gew.-%,
(B) 2 bis 20 Gew.-%,
(C) 0,1 bis 5 Gew.-%,
(D) 1 bis 10 Gew.-%,
(E) 5 bis 20 Gew.-%,
(F) 0,1 bis 5 Gew.-%,
(G) Rest Wasser,
jeweils bezogen auf das Gesamtgewicht (100 Gew.-%) der Pigmentpräparation.

7. Pigmentpräparation nach mindestens einem der vorhergehenden Ansprüche, **dadurch gekennzeichnet, dass** das organische Pigment von Komponente (A) ein Monoazo-, Disazo-, verlacktes Azo-, β-Naphthol-, Naphthol AS-, Benzimidazolon-, Disazokondensations-, Azo-Metallkomplex-Pigmente oder ein polycyclisches Pigment aus der Gruppe der Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder ein Ruß ist.

8. Pigmentpräparation nach mindestens einem der vorhergehenden Ansprüche, **dadurch gekennzeichnet, dass** es sich bei den Struktureinheiten (I) und (II) der Komponente (B) um Umsetzungsprodukte aus alkoxylierbaren drei- oder höherwertigen Polyolen handelt, vorzugsweise Diglycerin, Erythrit, Glycerin, Pentaerythrit, Polyglycerine, Sorbit, Trimethylolpropan oder Xylitol.

9. Pigmentpräparation nach mindestens einem der vorhergehenden Ansprüche, **dadurch gekennzeichnet, dass** diese eine Viskosität von kleiner 1,0 Pa*s besitzt, bestimmt durch Platte-Kegel-Viskosimeter bei 20 °C.

10. Pigmentpräparation nach mindestens einem der Ansprüche 1 bis 9, **dadurch gekennzeichnet, dass** die mittlere Teilchengröße bei kleiner als 200 nm liegt.

11. Pigmentpräparation nach mindestens einem der Ansprüche 1 bis 10, **dadurch gekennzeichnet, dass** die mittlere Teilchengröße bei kleiner als 150 nm liegt.

12. Verfahren zur Herstellung einer Pigmentpräparation nach mindestens einem der Ansprüche 1 bis 11, **dadurch gekennzeichnet, dass** man die Komponente (A) in Form von Pulver, Granulat oder wässrigem Presskuchen in Gegenwart von Wasser (G) sowie den Komponenten (B) und gegebenenfalls (C), (D), (E) und (F) dispergiert, anschließend gegebenenfalls Wasser (G), sowie gegebenenfalls eine oder mehrere der Komponenten (C), (D), (E) und (F) zumischt und gegebenenfalls die erhaltende wässrige Pigmentdispersion mit Wasser (G) verdünnt.

13. Verfahren zur Herstellung einer Pigmentpräparation nach Anspruch 12, **dadurch gekennzeichnet, dass** die Dispergierung mittels Rührwerkskugelmühle erfolgt, die mit einer Rührwerksumfangsgeschwindigkeit von über 10 m/s betrieben wird.

14. Verfahren zur Herstellung einer Pigmentpräparation nach Anspruch 12 und/oder 14, **dadurch gekennzeichnet, dass** die Dispergierung unter Einwirkung von nichtmetallischen Mahlkörpern vom Durchmesser kleiner oder gleich 1,2 mm erfolgt.

15. Verwendung einer Pigmentpräparation nach einem oder mehreren der Ansprüche 1 bis 11 zum Pigmentieren natürlicher oder synthetischer Materialien.

16. Verwendung nach Anspruch 15 zum Pigmentieren von wässrigen Beschichtungsstoffen, Anstrichmitteln, Dispersions- und Lackfarben, wasserverdünnbaren Lacken, Lasuren, Firnissen und Holzschutzsystemen.

17. Verwendung nach Anspruch 15 zur Herstellung von Tinten für Schreibutensilien, Buntstiftminen, Faserschreiber, Fineliner, Filzstifte, Gelroller, Text- und Whiteboardmarker.

18. Verwendung nach Anspruch 15 zur Herstellung von Druckfarben, Drucktinten, Ink-Jet-Tinten, Mikroemulsionstinten, UV-härtbaren Tinten sowie in solchen Tinten, die nach dem Hot-Melt-Verfahren funktionieren, Farbfiltern, elektronischen Tinten und "Electronic Paper".

19. Verwendung nach Anspruch 15 zur Herstellung von elektrofotografischen Tonern und Entwicklern, Ein- oder Zweikomponentenpulvertonern, Magnettonern, Flüssigtonern, Latextonern, Polymerisationstonern sowie Spezialtonern.

20. Verwendung nach Anspruch 15 zum Pigmentieren von natürlichen und synthetischen Fasermaterialien, Isolierstoffen, Glaswolle, Wurstdärmen, Saatgut, Düngemitteln, Glas, Glasflaschen, Putzen, Beton, Holzbeizen, Wachsen, Paraffinen, Tuschen, Pasten für Kugelschreiber, Kreiden, Wasch- und Reinigungsmitteln, Schuhpflegemitteln, Latex-Produkten, Schleifmitteln, bei Viskose-Spinnfärbungen sowie zum Einfärben von Kunststoffen.

## Claims

1. Aqueous pigment preparation, comprising
(A) at least one organic and/or inorganic pigment and/or filler
(B) at least one dispersant of the formula (I) or (II), or mixtures of dispersants of the formulas (I) and (II), 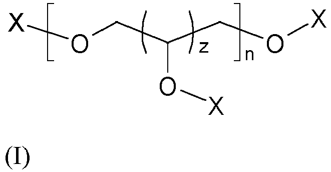 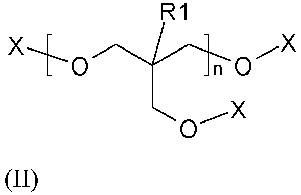 where
n is an integer greater than or equal to 1,
z is an integer greater than or equal to 1,
R1 is an aliphatic, linear or branched hydrocarbon radical having 1 to 10 carbon atoms or a hydrogen atom or the structural unit -O-X or the structural unit -CH₂-O-X,
and structural unit X corresponds to the formula (III) 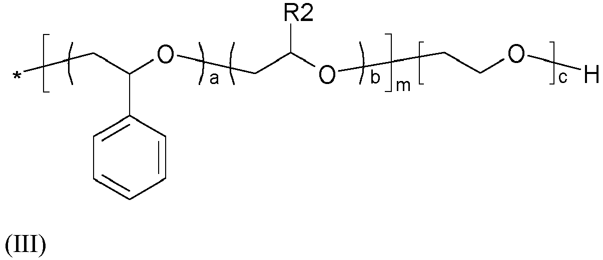 in which
a is an integer from 1 to 10,
b is an integer from 0 to 10,
c is an integer from 1 to 50,
m is 1 or 2; and
R2 is an aliphatic, linear or branched hydrocarbon radical having 1 to 10 carbon atoms,
and wherein 99% of the particles in component (A) have a particle size of < 500 nm, the particle size being determined by the process stated in the experimental section.

2. Composition according to Claim 1, **characterized in that** this additionally comprises
(C) wetting agents,
(D) and/or further surfactants and/or dispersants,
(E) and/or one or more organic solvents and/or one or more hydrotropic substances and/or mixtures thereof,
(F) and/or further additives customary for the production of aqueous pigment dispersions, and
(G) optionally water.

3. Pigment preparation according to Claim 1 and/or 2, comprising 5% to 80% by weight of component (A).

4. Pigment preparation according to at least one of the preceding claims, comprising 0.1% to 30% by weight of component (B).

5. Pigment preparation according to at least one of the preceding claims, **characterized by** the following composition of components (A) to (G):
(A) 5% to 80% by weight,
(B) 0.1% to 30% by weight,
(C) 0% to 10% by weight,
(D) 0% to 20% by weight,
(E) 0% to 30% by weight,
(F) 0% to 20% by weight,
(G) remainder water,
in each case based on the total weight (100% by weight) of the pigment preparation.

6. Pigment preparation according to at least one of the preceding claims, **characterized by** the following composition of components (A) to (G):
(A) 10% to 70% by weight,
(B) 2% to 20% by weight,
(C) 0.1% to 5% by weight,
(D) 1% to 10% by weight,
(E) 5% to 20% by weight,
(F) 0.1% to 5% by weight,
(G) remainder water,
in each case based on the total weight (100% by weight) of the pigment preparation.

7. Pigment preparation according to at least one of the preceding claims, **characterized in that** the organic pigment in component (A) is a monoazo pigment, disazo pigment, laked azo pigment, β-naphthol pigment, naphthol AS pigment, benzimidazolone pigment, disazo condensation pigment, azo metal complex pigment or a polycyclic pigment from the group of the phthalocyanine pigments, quinacridone pigments, perylene pigments, perinone pigments, thioindigo pigments, anthanthrone pigments, anthraquinone pigments, flavanthrone pigments, indanthrone pigments, isoviolanthrone pigments, pyranthrone pigments, dioxazine pigments, quinophthalone pigments, isoindolinone pigments, isoindoline pigments, and diketopyrrolopyrrole pigments, or is a carbon black.

8. Pigment preparation according to at least one of the preceding claims, **characterized in that** structural units (I) and (II) of component (B) are reaction products of alkoxylatable trihydric or polyhydric polyols, preferably diglycerol, erythritol, glycerol, pentaerythritol, polyglycerols, sorbitol, trimethylolpropane or xylitol.

9. Pigment preparation according to at least one of the preceding claims, **characterized in that** this has a viscosity of less than 1.0 Pa*s, determined by a cone-plate viscometer at 20°C.

10. Pigment preparation according to at least one of Claims 1 to 9, **characterized in that** the average particle size is less than 200 nm.

11. Pigment preparation according to at least one of Claims 1 to 10, **characterized in that** the average particle size is less than 150 nm.

12. Process for producing a pigment preparation according to at least one of Claims 1 to 11, **characterized in that** component (A) in the form of powder, granules or aqueous press cakes is dispersed in the presence of water (G) and also components (B) and optionally (C), (D), (E), and (F), and then admixed optionally with water (G) and also optionally with one or more of components (C), (D), (E), and (F), and the resulting aqueous pigment dispersion is optionally diluted with water (G).

13. Process for producing a pigment preparation according to Claim 12, **characterized in that** dispersion is effected using a stirred ball mill operated at a peripheral stirrer speed of over 10 m/s.

14. Process for producing a pigment preparation according to Claim 12 and/or 14, **characterized in that** dispersion is effected under the action of non-metallic grinding media having a diameter of less than or equal to 1.2 mm.

15. Use of a pigment preparation according to one or more of Claims 1 to 11 for pigmentation of natural or synthetic materials.

16. Use according to Claim 15 for pigmentation of aqueous coating materials, coatings, emulsion/gloss paints, water-thinnable lacquers, glazes, varnishes, and wood protection systems.

17. Use according to Claim 15 for production of inks for writing utensils, coloured pencil leads, fibretip pens, fineliners, felt pens, gel rollers, text markers, and whiteboard markers.

18. Use according to Claim 15 for production of inks, printing inks, inkjet inks, microemulsion inks, UV-curable inks, and also in those inks that function according to the hot-melt process, colour filters, electronic inks, and electronic paper.

19. Use according to Claim 15 for production of electrophotographic toners and developers, one- or two-component powder toners, magnetic toners, liquid toners, latex toners, polymerization toners, and also specialty toners.

20. Use according to Claim 15 for pigmentation of natural and synthetic fibre materials, insulating materials, glass wool, sausage casings, seeds, fertilizers, glass, glass bottles, plaster, cement, wood stains, waxes, paraffins, drawing inks, pastes for ballpoint pens, chalks, washing and cleaning agents, shoe-care agents, latex products, abrasives, in spin dyeing of viscose, and also for colouring plastics.

## Revendications

1. Préparation aqueuse pigmentaire, contenant
(A) au moins un pigment et/ou une charge organique et/ou inorganique
(B) au moins un dispersant des formules (I) ou (II) ou des mélanges des dispersants des formules (I) et (II), 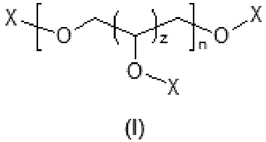 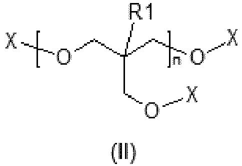 dans lesquelles
n représente un nombre entier supérieur ou égal à 1,
z représente un nombre entier supérieur ou égal à 1,
R1 représente un radical hydrocarboné aliphatique linéaire ou ramifié comprenant 1 à 10 atomes de carbone ou un atome d'hydrogène ou le motif structural -O-X ou le motif structural -CH₂-O-X,
et le motif structural X correspond à la formule (III) 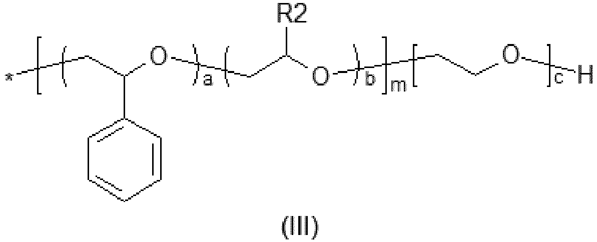
dans laquelle
a représente un nombre entier de 1 à 10,
b représente un nombre entier de 0 à 10,
c représente un nombre entier de 1 à 50,
m représente 1 ou 2 ; et
R2 représente un radical hydrocarboné aliphatique, linéaire ou ramifié, comprenant 1 à 10 atomes de carbone
et 99% des particules du composant (A) présentent une grosseur de particule < 500 nm, la grosseur de particule étant déterminée au moyen du procédé mentionné dans la partie expérimentale.

2. Composition selon la revendication 1, **caractérisée en ce qu'**elle contient en outre
(C) des mouillants,
(D) et/ou d'autres tensioactifs et/ou dispersants,
(E) et/ou un ou plusieurs solvants organiques et/ou une ou plusieurs substances hydrotropes et/ou leurs mélanges,
(F) et/ou d'autres additifs usuels pour la préparation de dispersions aqueuses pigmentaires et
(G) le cas échéant de l'eau.

3. Préparation pigmentaire selon la revendication 1 et/ou 2, contenant 5 à 80% en poids du composant (A).

4. Préparation pigmentaire selon au moins l'une quelconque des revendications précédentes, contenant 0,1 à 30% en poids du composant (B).

5. Préparation pigmentaire selon au moins l'une quelconque des revendications précédentes, **caractérisée par** la composition suivante des composants (A) à (G) :
(A) 5 à 80% en poids,
(B) 0,1 à 30% en poids,
(C) 0 à 10% en poids,
(D) 0 à 20% en poids,
(E) 0 à 30% en poids,
(F) 0 à 20% en poids,
(G) de l'eau pour le reste,
à chaque fois par rapport au poids total (100% en poids) de la préparation pigmentaire.

6. Préparation pigmentaire selon au moins l'une quelconque des revendications précédentes, **caractérisée par** la composition suivante des composants (A) à (G) :
(A) 10 à 70% en poids,
(B) 2 à 20% en poids,
(C) 0,1 à 5% en poids,
(D) 1 à 10% en poids,
(E) 5 à 20% en poids,
(F) 0,1 à 5% en poids,
(G) de l'eau pour le reste,
à chaque fois par rapport au poids total (100% en poids) de la préparation pigmentaire.

7. Préparation pigmentaire selon au moins l'une quelconque des revendications précédentes, **caractérisée en ce que** le pigment organique du composant (A) est un pigment monoazo, diazo, azo laqué, β-naphtol, naphtol AS, benzimidazolone, de condensation diazo, azo-complexe métallique ou un pigment polycyclique du groupe des pigments de type phtalocyanine, quinacridone, pérylène, périnone, thio-indigo, anthanthrone, anthraquinone, flavanthrone, indanthrone, isoviolanthrone, pyranthrone, dioxazine, quinophtalone, iso-indolinone, iso-indoline et dicétopyrrolopyrrole ou une suie.

8. Préparation pigmentaire selon au moins l'une quelconque des revendications précédentes, **caractérisée en ce qu'**il s'agit, pour les motifs structuraux (I) et (II) du composant (B), d'un produit de transformation de polyols trivalents ou de valence supérieure, pouvant être alcoxylés, de préférence de diglycérol, d'érythritol, de glycérol, de pentaérythritol, de polyglycérols, de sorbitol, de triméthylolpropane ou de xylitol.

9. Préparation pigmentaire selon au moins l'une quelconque des revendications précédentes, **caractérisée en ce qu'**elle présente une viscosité inférieure à 1,0 Pa.s, déterminée par un viscosimètre à plaque-cône à 20°C.

10. Préparation pigmentaire selon au moins l'une quelconque des revendications 1 à 9, **caractérisée en ce que** la grosseur moyenne des particules est inférieure à 200 nm.

11. Préparation pigmentaire selon au moins l'une quelconque des revendications 1 à 10, **caractérisée en ce que** la grosseur moyenne des particules est inférieure à 150 nm.

12. Procédé pour la confection d'une préparation pigmentaire selon au moins l'une quelconque des revendications 1 à 11, **caractérisé en ce qu'**on disperse le composant (A) sous forme de poudre, de granulat ou de gâteau de presse aqueux en présence d'eau (G) ainsi que des composants (B) et le cas échéant (C), (D), (E) et (F), ensuite, on y mélange le cas échéant de l'eau (G), ainsi que le cas échéant un ou plusieurs des composants (C), (D), (E) et (F) et on dilue le cas échéant la dispersion pigmentaire aqueuse obtenue avec de l'eau (G).

13. Procédé pour la confection d'une préparation pigmentaire selon la revendication 12, **caractérisé en ce que** la dispersion est réalisée au moyen d'un broyeur-agitateur à billes, qui fonctionne à une vitesse périphérique de l'agitateur supérieure à 10 m/s.

14. Procédé pour la confection d'une préparation pigmentaire selon la revendication 12 et/ou 14, **caractérisé en ce que** la dispersion est réalisée sous l'action de corps de broyage non métalliques d'un diamètre inférieur ou égal à 1,2 mm.

15. Utilisation d'une préparation pigmentaire selon l'une ou plusieurs des revendications 1 à 11 pour la pigmentation de matériaux naturels ou synthétiques.

16. Utilisation selon la revendication 15 pour la pigmentation d'agents de revêtement aqueux, d'enduits aqueux, de peintures dispersées et de peintures laques aqueuses ; de laques, de lasures, de vernis et de systèmes de protection du bois diluables à l'eau.

17. Utilisation selon la revendication 15 pour la confection d'encres pour des fournitures de bureau, des mines pour feutres, des pointes fines, des feutres fins, des marqueurs, des rollers à gel, des surligneurs et des marqueurs pour tableau blanc.

18. Utilisation selon la revendication 15 pour la fabrication de couleurs d'impression, d'encres d'imprimerie, d'encres pour jet d'encre, d'encres en microémulsion, d'encres durcissable aux UV ainsi que dans des encres qui fonctionnent selon le procédé par thermofusion, de filtres couleurs, d'encres électroniques et de papier électronique (Electronic Paper).

19. Utilisation selon la revendication 15 pour la fabrication de toners et de développeurs électrophotographiques, de toners en poudre à un ou deux composants, de toners magnétiques, de toners liquides, de toners au latex, de toners de polymérisation ainsi que de toners spéciaux.

20. Utilisation selon la revendication 15 pour la pigmentation de matériaux fibreux naturels et synthétiques, de matériaux d'isolation, de laine de verre, de boyaux, de semences, d'engrais, de verre, de bouteilles en verre, d'enduits, de béton, de teintures pour bois, de cires, de paraffines, de gouaches, de pâtes pour stylos-billes, de craies, d'agents de lavage et de nettoyage, d'agents d'entretien de chaussures, de produits à base de latex, d'abrasifs, lors de teintures au filage de viscose ainsi que pour la coloration de matériaux synthétiques.
